# EUROPEAN PATENT APPLICATION

(11) **EP 4 831 262 A1**
(43) Date of publication of application: **28.10.2026**
(21) Application number: 24907401.4
(22) Date of filing: 17.12.2024
(51) Int. Cl.: C09K 11/88, B82Y 20/00, C01B 19/00, C09K 11/08

(54) **SEMICONDUCTOR NANOPARTICLES CONTAINING AGCU CHALCOGEN COMPOUND AS MAIN COMPONENT**

(30) Priority: 22.12.2023 JP 2023217099
(71) Applicant: NATIONAL UNIVERSITY CORPORATION TOKAI NATIONAL HIGHER EDUCATION AND RESEARCH SYSTEM, Nagoya-shi, Aichi 464-8601 (JP); Tanaka Precious Metal Technologies Co., Ltd., Tokyo 103-0025 (JP)
(72) Inventor: TORIMOTO, Tsukasa, Nagoya-shi, Aichi 464-8601 (JP); MIYAMAE, Chie, Nagoya-shi, Aichi 464-8601 (JP); SATO, Hiroki, Tsukuba-shi, Ibaraki 300-4247 (JP); OHSHIMA, Yuusuke, Tsukuba-shi, Ibaraki 300-4247 (JP); SATO, Taisuke, Tsukuba-shi, Ibaraki 300-4247 (JP); KANASUGI, Takafumi, Tsukuba-shi, Ibaraki 300-4247 (JP)
(74) Representative: Weickmann & Weickmann PartmbB
(86) International application number: PCT/JP2024/044550
(87) International publication number: WO 2025/135016

(57) **Abstract**

The present invention relates to a semiconductor nanoparticle including a AgCu chalcogen compound containing Ag, Cu, and a chalcogen element (Ch), represented by the following formula. **In** the present invention, Te is essentially contained as the chalcogen element. Te relatively large in mass among chalcogen elements is applied to allow optical response characteristics to be shifted toward a longer wavelength. The present inventive semiconductor nanoparticle includes 90% by atom or more of the AgCu chalcogen compound, in which an absorption edge wavelength on a long-wavelength side of an absorption spectrum is 1200 nm or more.

[Formula 1] AgₓCu_{y}Ch_{z}

**In** the formula, Ch is a chalcogen element. x, y, and z are the respective numbers of Ag, Cu, and chalcogen element atoms, and 0.2 ≤ z/(x + y) ≤ 1 and 1.0 ≤ x/y ≤ 10.0 are satisfied.

## Description

### FIELD OF THE INVENTION

The present invention relates to a semiconductor nanoparticle containing a AgCu chalcogen compound as a main component, specifically to a semiconductor nanoparticle including a AgCu chalcogen compound which contains Te as an essential chalcogen element and which has suitable optical responsivity in a long-wavelength region.

### DESCRIPTION OF THE RELATED ART

Semiconductors are formed into nanoscale microparticles to exert the quantum confinement effect and exhibit the bandgap depending on the particle size. Therefore, semiconductor nanoparticles can be controlled for the composition and the particle size and regulated for the bandgap to allow the emission wavelength and the absorption wavelength to be arbitrarily set. Semiconductor particles utilizing such characteristics are also referred to as quantum dots (QD), and are expected to be actively used in various technical fields. Application examples of semiconductor nanoparticles are studied about, for example, utilization in light-emitting elements and fluorescent substances for use in display apparatuses, marker substances for bio-related substance detection, and the like.

Semiconductor nanoparticles not only can be controlled for the emission wavelength by particle size adjustment as described above, but also exhibit a sufficiently narrow and stable emission peak width as compared with organic dyes. Furthermore, semiconductor nanoparticles not only can be controlled for the absorption wavelength, but also have the properties of having a high quantum efficiency and a high absorbance index. Semiconductor nanoparticles, because of such characteristics, are also studied about use for photoelectric conversion elements or light-receiving elements to be mounted in solar batteries, various light sensors, or the like.

In particular, semiconductor nanoparticles are expected to be applied in light-receiving elements for light sensors corresponding to the near infrared region (NIR) or the short-wave infrared region (SWIR). These light sensors capable of corresponding to light in the long-wavelength region are mounted in LIDAR (Light Detection and Ranging) or SWIR image sensors. LIDAR is a remote sensing system for automobile automatic operations, drones, marine vessels, and the like, and serves as an important device for development of recent automatic operation techniques. In recent years, LIDAR has also been applied to face authentication techniques or augmented reality (AR) techniques in smartphones, tablets, or the like. SWIR image sensors are devices predicted to be increasingly demanded in future in the fields of food inspection, agriculture, drone, and the like.

Application examples of conventional light-receiving elements for sensors in optical devices as described above have been often Si thin films. However, sensors with Si thin films significantly deteriorate in sensitivity in a long wavelength region of 900 nm or more, and therefore cannot be suited for the above applications. Thus, development of light-receiving elements with semiconductor nanoparticles is expected.

Some semiconductor compounds have been heretofore studied for constitutions of semiconductor nanoparticles. There are known, as semiconductor compounds having optical responsivity in the long-wavelength region of the near infrared region (NIR) and the short-wave infrared region (SWIR), metal chalcogenide compounds such as PbS, PbSe, CdHgTe, Ag₂S, Ag₂Se, Ag₂Te, AgInSe₂, AgInTe₂, CuInSe₂, CuInTe₂, and InAs (Patent Documents 1 to 4). The present applicant also discloses a semiconductor nanoparticle containing a AgAuS-based compound as a main component in Patent Document 5.

### Prior Art Document

### Patent Document

Patent Document 1
   Japanese Patent Application Laid-Open No. 2004-243507
Patent Document 2
   Japanese Patent Application Laid-Open No. 2004-352594
Patent Document 3
   Japanese Patent Application Laid-Open No. 2017-014476
Patent Document 4
   International Publication No. WO2020/054764
Patent Document 5
   Japanese Patent No. 7269591

### SUMMARY OF THE INVENTION

### Technical Problem

Although the above semiconductor compounds have optical responsivity in the desired wavelength region, most of such compounds have drawbacks in light of use in applications such as display apparatuses or markers for bio-related substance detection. For example, the RoHS Directive (Restriction of the use of certain Hazardous Substances in electrical and electronic equipment) in EU prescribes use restrictions of Pb in electrical and electronic equipment from the viewpoint of environmental burden. Therefore, a semiconductor nanoparticle including a compound containing Pb as a metal component is hardly expected to be widely utilized in electrical and electronic fields. A compound having Cd, Hg, or the like being a heavy metal is also difficult to utilize in view of use of semiconductor nanoparticles in the bio-related field.

Although the above semiconductor compounds have optical responsivity in a long-wavelength region, one capable of exhibiting optical responsivity on the longer-wavelength side is increasingly demanded. Recent automobile automatic operation techniques have been remarkably developed, and are required to deal with automatic operation levels (Levels 4 and 5) at which no operation by any driver is premised. In this case, it is important for LIDAR to have responsivity in a longer wavelength region in which there is hardly affected by solar light/natural light. Therefore, it is deemed that quantum dot techniques are still being studied. There is then a need for a semiconductor nanoparticle capable of exhibiting responsivity in a longer wavelength region in consideration of usefulness.

The present invention has been made against the background of the above circumstances, and proposes a semiconductor nanoparticle including a novel semiconductor compound, in which the semiconductor nanoparticle not only is provided in consideration of usefulness against various regulations, but also has suitable optical responsivity. The present invention particularly presents a semiconductor nanoparticle which not only exhibits suitable light absorption characteristics in the long-wavelength region of the near infrared region (NIR) and the short-wave infrared region (SWIR), but also can express light emission.

### Solution to Problem

In order to study means for solving the above problems, the present inventors have focused on a semiconductor nanoparticle including a AgAuS compound relating to the prior art (Patent Document 5) by the present applicants. Ag and Au are suitably usable metals from the viewpoint of corresponding to regulations on environmental burden, toxicity, and the like, and AgAuS compounds are semiconductor compounds capable of exhibiting optical responsivity. However, conventional AgAuS compound nanoparticles have had the remaining problem about optical responsivity in the infrared region (NIR) and the short-wave infrared region (SWIR). The prior art by the present applicant provides application of a AgAuS-based multinary compound by addition of a metal such as In to a AgAuS compound and thus allows the absorption wavelength to be shifted toward a longer wavelength.

The present inventors have tried to impart optical responsivity in a long-wavelength region to a transition metal chalcogen compound being the AgAuS compound of the above prior art, based on approaches in two directions, with reference to the transition metal chalcogen compound.

The first approach is to apply, as an essential constitution, Te (tellurium) which serves as a chalcogen element and which is larger in mass than S (sulfur). The reason for this is that an increase in mass of a chalcogen element to be bound to a transition metal is presumed to result in a decrease in orbital energy difference between each metal element and the chalcogen element during formation of the compound, thereby allowing optical responsivity to be shifted toward a longer wavelength.

The second approach is to optimize a transition metal component of a chalcogen compound, specifically, apply a combination of Ag and Cu instead of a combination of Ag and Au. Cu is an element of Group 11 as in Au and has an electron structure similar to that of Au, and thus can serve as a suitable optical semiconductor when adopted as a chalcogen compound. Cu is one of elements essential for the human body and thus has favorable biocompatibility.

The present inventors have then studied whether or not a nanoparticle of a AgCu chalcogen compound with Te as an essential chalcogen element can be synthesized, and the optical responsivity of the compound (hereinafter, "chalcogen element" is sometimes referred to as "Ch"), as a result, have found a AgCu chalcogen compound which not only has light absorption characteristics where an absorption edge is observed in a long-wavelength region of 1200 nm or more, but also can also express a light-emission phenomenon, and thus have conceived the present invention.

Specifically, the present invention is drawn to a semiconductor nanoparticle including a AgCu chalcogen compound containing Ag, Cu, and a chalcogen element, represented by the following formula, wherein the chalcogen element contains Te as an essential chalcogen element, and the semiconductor nanoparticle includes 90% by atom or more of the AgCu chalcogen compound.

[Formula 1] AgₓCu_{y}Ch_{z}

wherein Ch is a chalcogen element, x, y, and z are the respective numbers of Ag, Cu, and chalcogen element atoms, and 0.2 ≤ z/(x + y) ≤ 1.0 and 1.0 ≤ x/y ≤ 10.0 are satisfied.

Hereinafter, a constitution and a production method of the semiconductor nanoparticle containing, as a main component, a AgCu chalcogen compound containing Te as an essential chalcogen element, of the present invention, are described.

### A. Constitution of the semiconductor nanoparticle of the present invention

### A-1. Chemical composition of semiconductor nanoparticle

As described above, the semiconductor nanoparticle of the present invention contains a AgCu chalcogen compound as a main component. The AgCu chalcogen compound can be represented by AgₓCu_{y}Ch_{z} where the respective numbers of Ag, Cu, and chalcogen element Ch atoms are designated as x, y, and z. In view of the composition of the AgCuCh compound, the ratio (ratio of atoms) of the number x of Ag atoms and the number y of Cu atoms is set to 1.0 ≤ x/y ≤ 10.0. As far as there is studied by the present inventors, a nanoparticle of a AgCu chalcogen compound satisfying this composition range exhibits suitable light absorption characteristics in a long-wavelength region of 1200 nm or more. Such a AgCu chalcogen compound nanoparticle satisfying this composition range can also express light emission. The ratio x/y of Ag and Cu atoms then changes, and thus optical response characteristics of the AgCu chalcogen compound nanoparticle change. The ratio x/y of Ag and Cu atoms is more preferably set to 3.0 or more and 5.0 or less, and thus an emission peak can be observed in a long-wavelength region of 1200 nm or more.

The chalcogen element (Ch) of the AgCu chalcogen compound applied in the present invention is a chalcogen element essentially containing Te. As described above, Te relatively large in mass among chalcogen elements is applied, and thus allows a wavelength, at which optical responsivity is exhibited, to be shifted toward a longer wavelength. The chalcogen element in the AgCu chalcogen compound in the present invention is bound so that charge compensation is made for Ag and Cu being transition metals. The ratio of the number z of chalcogen element atoms and the number of atoms (x + y) of transition metal components (Ag and Cu) satisfies 0.2 ≤ z/(x + y) ≤ 1.0. The ratio of such atoms, z/(x + y), is preferably 0.3 or more and 0.7 or less (0.3 ≤ z/(x + y) ≤ 0.7), more preferably 0.5 or more and 0.7 or less (0.5 ≤ z/(x + y) ≤ 0.7).

The chalcogen element in the AgCu chalcogen compound in the present invention is defined to essentially contain Te, and thus may contain only Te or may also contain an additional chalcogen element other than Te. The reason why such additional chalcogen element is contained in addition to Te in the AgCu chalcogen compound in the present invention is because, when a chalcogen element is contained in a protective agent, a solvent, or the like for use during synthesis, it binds together with Te to a transition metal component. Such additional chalcogen element which can be contained together with Te during this synthesis is preferably S or Se. When the additional chalcogen element other than Te is contained in the AgCu chalcogen compound in the present invention and the number of Te atoms is defined as z^{Te}, the ratio z^{Te}/z of the number (z^{Te}) of Te atoms to the entire number (z) of chalcogen element atoms is preferably 0.2 or more and 0.4 or less, more preferably 0.25 or more and 0.35 or less. As described below, according to studies by the present inventors, when any additional chalcogen element is contained together with Te as chalcogen elements, light absorption characteristics change depending on the ratio of Te atoms.

The composition of the AgCu chalcogen compound, described above, is the entire composition of the AgCu chalcogen compound in the semiconductor nanoparticle. The AgCu chalcogen compound applied to the present invention may be constituted of a single phase or a plurality of phases. For example, when the chalcogen element is only Te, examples of a specific possible chemical composition of the AgCu chalcogen compound (AgₓCu_{y}Te_{z}) include some compositions depending on the valences of Ag, Cu, and Te, and a chalcogen compound having a stoichiometric composition such as AgCuTe (x = 1, y = 1, z = 1) or AgCuTe₂ (x = 1, y = 1, z = 2) is exemplified. When S and/or Se as chalcogen element(s) are/is contained in addition to Te, examples include a chalcogen compound having a stoichiometric composition (such as AgCuS (x = 1, y = 1, z = 1) or AgCuSe (x = 1, y = 1, z = 1)). The AgCu chalcogen compound in the semiconductor nanoparticle of the present invention is constituted in the form of a single phase or a plurality of phases of a compound having such a stoichiometric composition. A compound not having the above stoichiometric composition may also be contained, provided that x, y, and z in the entire AgCu chalcogen compound in the semiconductor nanoparticle fall within the respective ranges of the above conditions.

The semiconductor nanoparticle of the present invention contains the AgCu chalcogen compound as a main component, and is constituted of 90% by atom or more of the AgCu chalcogen compound. The semiconductor nanoparticle may include only the AgCu chalcogen compound. The semiconductor nanoparticle more preferably includes 95% by atom or more of the AgCu chalcogen compound. The semiconductor nanoparticle of the present invention sometimes includes any other element than Ag, Cu, and the chalcogen element essentially containing Te, constituting the AgCu chalcogen compound. For example, the semiconductor nanoparticle sometimes includes a constituent element of a solvent and/or an element contained in each precursor substance of Ag, Cu, and Te serving as raw materials in synthesis of the AgCu chalcogen compound. Examples of the element which can be contained, other than Ag, Cu, and the chalcogen element as essential constituent elements, include C, P, Cl, Br, and I, and the content of these elements in the semiconductor nanoparticle is acceptable as long as the content is less than 10% by mass. It is noted that the composition values of the compound and elements shown here are values with respect to the semiconductor nanoparticle and the contents of a protective agent described below and a constituent element of the protective agent are not included.

### A-2. Structure of the semiconductor nanoparticle of the present invention

As described above, the AgCu chalcogen compound applied to the present invention is constituted of a single phase or a plurality of phases. A mode of a semiconductor nanoparticle including a plurality of phases can have a so-called core-shell structure. An example of the core-shell structure is a structure where the AgCu chalcogen compound containing Ag, Cu, and Te serves as a core (core compound) and a AgCu chalcogen compound different in composition from the core compound or a compound not containing any of Ag, Cu, and Te serves as a shell (shell compound) and covers at least one portion of a surface of the core compound. The structure of the semiconductor nanoparticle is not limited to a regular combination of a plurality of phases, like the core-shell structure, and a plurality of phases different in composition may be randomly distributed. Herein, the "Cu-rich", and the "Ag- and Te-rich" respectively mean that the compositional ratios of Cu, and Ag and Te in the relevant phase are more than 50% by atom.

The shape of the semiconductor nanoparticle of the present invention may be may be a spherical shape, or a cube shape or a rod shape. A spherical-shaped or cube-shaped semiconductor nanoparticle preferably has an average particle size of 2 nm or more and 20 nm or less. The particle size of the semiconductor nanoparticle is associated with the adjustment action of the bandgap with the quantum confinement effect. The above average particle size is preferred for exertion of suitable light absorption characteristics with bandgap adjustment. The average particle size of the semiconductor nanoparticle can be here obtained with observation of a plurality of (preferably 100 or more) particles with an electronic microscope such as TEM, measurement of the particle size of each particle, and calculation of the particle number average. The particle size can be here measured as the average value of the longer size (longer axis) and the shorter size (shorter axis).

A scanning transmission electron microscope (Scanning TEM) can be here suitably used in analysis of the composition and the structure of the semiconductor nanoparticle of the present invention. In particular, a high angle annular dark field scanning TEM (HAADF-STEM) can provide a scattered image reflecting the composition information of the nanoparticle, and can be combined with an energy dispersive X-ray spectrometer (EDS, EDX) or the like, to figure out the distribution state of Ag, Cu, and Te, and the composition of the entire nanoparticle.

### A-3. Optical responsivity of the semiconductor nanoparticle of the present invention

As described above, the semiconductor nanoparticle is adjusted with respect to the bandgap with the quantum confinement effect depending on the particle size, and varied in optical responsivity. In consideration of light absorption characteristics of the semiconductor nanoparticle of the present invention, the absorption edge wavelength on the long-wavelength side of the absorption spectrum is preferably 1200 nm or more. Thus, the semiconductor nanoparticle has absorptivity to light in the visible region to the near infrared region. A more preferred aspect of the semiconductor nanoparticle of the present invention can be drawn to one in which the absorption edge wavelength on the long-wavelength side is 1400 nm or more.

The semiconductor nanoparticle of the present invention can also express a light-emission phenomenon. An emission spectrum obtained here exhibits an emission peak in a wavelength region of 1000 nm or more. A preferred aspect of the semiconductor nanoparticle of the present invention can be drawn to one exhibiting an emission peak in a long-wavelength region of 1200 nm or more, more preferably 1400 nm or more.

### A-4. Usage aspect of the semiconductor nanoparticle of the present invention

The semiconductor nanoparticle of the present invention, which is applied to and supported on an appropriate substrate or carrier, can be thus applied in various applications described above, such as a light sensor element. The constitutions, shapes and dimensions of such substrate or carrier are not particularly limited. Examples of a plate-, foil- or film-like substrate include glass, quartz, silicon, ceramics or metal. Examples of a particulate or powdery carrier include inorganic oxides such as ZnO, TiO₂, WO₃, SnO₂, In₂O₃, and Al₂O₃. The semiconductor nanoparticle may be supported on the inorganic oxide carrier and furthermore fixed to the substrate.

When the semiconductor nanoparticle is applied to and supported on the substrate or carrier, a solution or slurry or ink in which the semiconductor nanoparticle is dispersed in an appropriate dispersion medium is often used as described above. The dispersion medium usable in the solution or the like is chloroform, toluene, cyclohexane, hexane, or the like. A usable application method of the solution or the like of the semiconductor nanoparticle can be dipping or a spin coating method, and a usable supporting method of the semiconductor nanoparticle can be any of various methods such as a dropping method, an impregnation method, and an adsorption method.

The semiconductor nanoparticle of the present invention preferably includes a protective agent for suppressing aggregation during the synthesis of the semiconductor nanoparticle or in dispersing of the semiconductor nanoparticle in the dispersion medium as described above. The protective agent is preferably at least any one of an alkylamine having 4 or more and 20 or less alkyl chain carbon atoms, an alkenylamine having 4 or more and 20 or less alkenyl chain carbon atoms, an alkylcarboxylic acid having 3 or more and 20 or less alkyl chain carbon atoms, an alkenylcarboxylic acid having 3 or more and 20 or less alkenyl chain carbon atoms, and an alkanethiol having 4 or more and 20 or less alkyl chain carbon atoms. Such a protective agent is bound to a surface of the semiconductor nanoparticle to cover at least one portion of the surface, and inhibit the semiconductor nanoparticle from being aggregated in a dispersion liquid, thereby providing a homogeneous solution or the like. Such a protective agent is added together with a raw material, to the reaction system, to synthesize a nanoparticle having a suitable average particle size in a synthesis process of the semiconductor nanoparticle. Such a protective agent can be applied in a single form of the above alkylamine, alkenylamine, alkylcarboxylic acid, alkenylcarboxylic acid, and alkanethiol, or as a combination of a plurality of these protective agents.

### B. Method for producing the semiconductor nanoparticle of the present invention

Next, the method for producing the semiconductor nanoparticle of the present invention is described. The present inventors have found that the synthesis of the AgCu chalcogen compound having the above composition is preferably synthesis where respective compounds containing Ag, Cu, and Te as constituent elements are used as precursors (Ag precursor, Cu precursor, and Te precursor) and these compounds are introduced into the same reaction system and simultaneously heated and thus reacted. Hereinafter, the method for producing the semiconductor nanoparticle, to which the method for synthesizing the AgCu chalcogen compound is applied, is described.

### B-1. Raw materials (Ag precursor, Cu precursor, and Te precursor)

The Ag precursor, the Cu precursor, and the Te precursor applied as raw materials are a Ag salt or a Ag complex, a Cu salt or a Cu complex, and a Te compound, respectively. The Ag precursor and the Cu precursor are preferably a salt or complex containing monovalent Ag and one containing monovalent Cu.

The Ag precursor applied is a Ag salt or a Ag complex. The Ag precursor is preferably a salt or complex containing monovalent Ag. Specific suitable examples of the Ag precursor include silver acetate (Ag(OAc)), silver nitrate, silver carbonate, silver oxide, silver oxalate, silver chloride, silver iodide, silver(I) cyanide, and silver diethyldithiocarbamate.

The Cu precursor applied is a Cu salt or a Cu complex. The Cu precursor is preferably a salt or complex containing monovalent Cu. Here, the Cu precursor used can also be a salt or complex containing bivalent Cu. This is because bivalent Cu is reduced to monovalent Cu with the solvent, the co-existing Te precursor, or the like, during synthesis of the semiconductor nanoparticle. Specific suitable examples of the Cu precursor include copper acetate, copper chloride, copper iodide, and copper bromide.

The Te compound applicable as the Te precursor can be a Te compound such as tellurium oxide (TeO₂), telluric acid (Te(OH)₆), or sodium tellurite (Na₂TeO₃).

### B-2. Formation of reaction system of AgCu chalcogen compound

The AgCu chalcogen compound is synthesized with a single reaction system formed from the above Ag precursor, the Cu precursor, and the Te precursor mixed. The Ag precursor, the Cu precursor, and the Te precursor separately prepared may be here sequentially mixed, and the order of mixing is not particularly limited. The reaction system may also be formed by adjustment of a mixture of the Ag precursor and the Cu precursor serving as transition metal components of the AgCu chalcogen compound, as a metal source precursor, and then mixing of the metal source precursor and the Te precursor.

The ratio (x/y) of Ag and Cu atoms in the AgCu chalcogen compound (AgₓCu_{y}Ch_{z}) synthesized can be adjusted with the ratio of the amounts of the Ag precursor and the Cu precursor loaded. The ratio of the amounts loaded for the synthesis of the AgCu chalcogen compound in the present invention, in which the ratio (x/y) of Ag and Cu atoms falls within a predetermined range, is preferably set to 1 or more and 10 or less, more preferably 2 or more and 4 or less, in terms of the ratio (a/b: hereinafter, this ratio is sometimes referred to as "ratio of Ag loaded") under the assumption that the number of Ag atoms in the Ag precursor is a and the number of Cu atoms in the Cu precursor is b.

The amount of the Te precursor loaded in the reaction system can have an effect on the number (z^{Te}) of Te atoms in the chalcogen element in the AgCu chalcogen compound (AgₓCu_{y}Ch_{z}) synthesized. Studies by the present inventors indicate that the ratio (c/b: hereinafter, this ratio is sometimes referred to as "ratio of Te loaded") is preferably set to 0.1 or more and 2 or less, more preferably 0.1 or more and 1 or less under the assumption that the number of Te atoms in the Te precursor is c and the number b of Cu atoms in the above Cu precursor is set as the basis.

As described above, a protective agent is preferably bound to the AgCu chalcogen compound in the semiconductor nanoparticle of the present invention. When this protective agent contains a chalcogen element, the chalcogen element can constitute one portion of the chalcogen element in the AgCu chalcogen compound in the present invention. The protective agent is then preferably added together with the Ag precursor, the Cu precursor, and the Te precursor, to the above reaction system. A preferred protective agent added here is at least any one of an alkylamine having 4 or more and 20 or less alkyl chain carbon atoms, an alkenylamine having 4 or more and 20 or less alkenyl chain carbon atoms, an alkylcarboxylic acid having 3 or more and 20 or less alkyl chain carbon atoms, an alkenylcarboxylic acid having 3 or more and 20 or less alkenyl chain carbon atoms, and an alkanethiol having 4 or more and 20 or less alkyl chain carbon atoms.

The reaction system in synthesis of the semiconductor nanoparticle can also provide a nanoparticle in no solvent, but a solvent is preferably used. When the solvent is used, for example, octadecene, tetradecane, oleic acid, oleylamine, dodecanethiol, or any mixture of these solvents can be applied.

### B-3. Synthesis conditions of AgCu chalcogen compound

A reaction system constituted of the Ag precursor, the Cu precursor, the Te precursor, and the protective agent is heated to synthesize a AgCu chalcogen compound nanoparticle. The heating temperature (reaction temperature) is here set to 100°C or more and 200°C or less. A heating temperature of less than 100°C hardly allows a synthesis reaction to progress. In this regard, a heating temperature exceeding 200°C sometimes causes a nanoparticle having an unstable particle shape to be formed. A more suitable reaction temperature is 100°C or more and 150°C or less.

The reaction time (heating time) can be adjusted with the amounts of raw materials loaded or the like, and is preferably set to 5 minutes or more and 120 minutes or less. The reaction time is more preferably 10 minutes or more, further preferably 15 minutes or more. The reaction system is here preferably stirred while synthesis reaction of the AgCu chalcogen compound nanoparticle is proceeding.

After completion of the synthesis reaction of the AgCu chalcogen compound nanoparticle, the reaction system is, if necessary, cooled, and the nanoparticles can be recovered as the semiconductor nanoparticle. The nanoparticle may be here precipitated with addition of an alcohol (ethanol, methanol, or the like) serving as a poor solvent, or the semiconductor nanoparticle may be precipitated by centrifugation or the like and thus recovered, and furthermore washed with alcohol (ethanol, methanol, or the like) once and then uniformly dispersed in a good solvent such as chloroform.

### Advantageous Effects of the Invention

As described above, the present invention is drawn to a semiconductor nanoparticle containing, as a main component, a AgCu chalcogen compound (AgₓCu_{y}Ch_{z}) with Te as an essential chalcogen element. The semiconductor nanoparticle of the present invention has suitable optical responsivity, and also has usefulness in consideration of use restrictions or the like. The semiconductor nanoparticle of the present invention can correspond to applications such as light-receiving elements and light-emitting elements in the long-wavelength region of the near infrared region (NIR) and the short-wave infrared region (SWIR).

### BRIEF DESCRIPTION OF THE DRAWINGS

Fig. 1 shows TEM images of semiconductor nanoparticles including AgCu chalcogen compounds (AgₓCu_{y}Ch_{z}) synthesized in First Embodiment;
Fig. 2 illustrates measurement results of absorption spectra of semiconductor nanoparticles including AgCu chalcogen compounds (AgₓCu_{y}Ch_{z}) synthesized in First Embodiment;
Fig. 3 illustrates measurement results of emission spectra of semiconductor nanoparticles including AgCu chalcogen compounds (AgₓCu_{y}Ch_{z}) synthesized in First Embodiment;
Fig. 4 illustrates measurement results of absorption spectra of semiconductor nanoparticles including AgCu chalcogen compounds (AgₓCu_{y}Ch_{z}) synthesized in Second Embodiment;
Fig. 5 illustrates measurement results of emission spectra of semiconductor nanoparticles including AgCu chalcogen compounds (AgₓCu_{y}Ch_{z}) synthesized in Second Embodiment;
Fig. 6 shows TEM images of semiconductor nanoparticles including AgCu chalcogen compounds (AgₓCu_{y}Ch_{z}) each synthesized at the heating temperature varied in Third Embodiment;
Fig. 7 illustrates measurement results of absorption spectra of semiconductor nanoparticles including AgCu chalcogen compounds (AgₓCu_{y}Ch_{z}) each synthesized at the heating temperature varied in Third Embodiment;
Fig. 8 illustrates measurement results of emission spectra of semiconductor nanoparticles including AgCu chalcogen compounds (AgₓCu_{y}Ch_{z}) each synthesized at the heating temperature varied in Third Embodiment;
Fig. 9 shows TEM images of semiconductor nanoparticles including AgCu chalcogen compounds (AgₓCu_{y}Ch_{z}) each synthesized at the reaction time varied in Third Embodiment;
Fig. 10 illustrates measurement results of absorption spectra of semiconductor nanoparticles including AgCu chalcogen compounds (AgₓCu_{y}Ch_{z}) each synthesized at the reaction time varied in Third Embodiment; and
Fig. 11 illustrates measurement results of emission spectra of semiconductor nanoparticles including AgCu chalcogen compounds (AgₓCu_{y}Ch_{z}) each synthesized at the reaction time varied in Third Embodiment.

### DETAILED DESCRIPTION OF THE PREFERRED EMBODIMENTS

First Embodiment: Hereinafter, Embodiments of the present invention are described. In the present Embodiment, each semiconductor nanoparticle including a AgCu chalcogen compound (AgₓCu_{y}Ch_{z}) was synthesized, and not only confirmed with respect to the appearance and the like, but also evaluated about optical responsivity characteristics. In the present Embodiment, such AgCu chalcogen compound nanoparticles varied in ratio (x/y) of Ag and Cu atoms were synthesized.

Such each semiconductor nanoparticle including a AgCu chalcogen compound in the present Embodiment was synthesized as a semiconductor nanoparticle by preliminary adjustment of a mixture of a Ag precursor and a Cu precursor serving as transition metal components, as a metal source precursor, in advance, and then mixing/reacting of the metal source precursor with a Te precursor.

Silver acetate (Ag(OAc)) as the Ag precursor and copper acetate (Cu(OAc)) as the Cu precursor were dissolved/mixed in 3 mL of 1-dodecanethiol (DDT) as a solvent/protective agent, and thus a metal source precursor was prepared. The total content of Ag and Cu in the solution was here set so as to be 0.08 mmol in terms of metal. Silver acetate and copper acetate were then mixed so that the ratio (a/b) of Ag loaded was 3/1, 2.5/1.5, 2/2, or 1.5/2.5. While this metal source precursor was prepared, 0.2 mmol of tellurium oxide (TeO₂) was dissolved in 2 mL of DDT as a solvent/protective agent, and heated under a nitrogen atmosphere at 100°C for 5 minutes, to prepare a Te precursor solution.

Each AgCu chalcogen compound nanoparticle was synthesized as follows. First, a solution of the metal source precursor (Ag and Cu) was heated under a nitrogen atmosphere at 150°C for 5 minutes. The above Te precursor solution was injected into the solution with a syringe. Thereafter, the mixture was stirred under heating at a reaction temperature of 150°C for 15 minutes under a nitrogen atmosphere. After completion of the reaction, the mixture was allowed to cool, and then centrifuged at 4000 rpm for 5 minutes to separate a supernatant solution and a precipitate. Then, 4 cm³ of ethanol/toluene was added as a poor solvent to the supernatant solution to generate a precipitate, and then the precipitate was recovered with centrifugation at 4000 rpm for 5 minutes to provide a AgCu chalcogen compound nanoparticle.

The AgCu chalcogen compound nanoparticle obtained with the above operations was dispersed in 3 cm³ of chloroform to give a dispersion liquid of such a semiconductor nanoparticle including a AgCu chalcogen compound. This dispersion liquid was transferred to a sample bottle, subjected to purging with nitrogen, thereafter protected from light, and refrigerated and stored.

### [TEM observation of semiconductor nanoparticle]

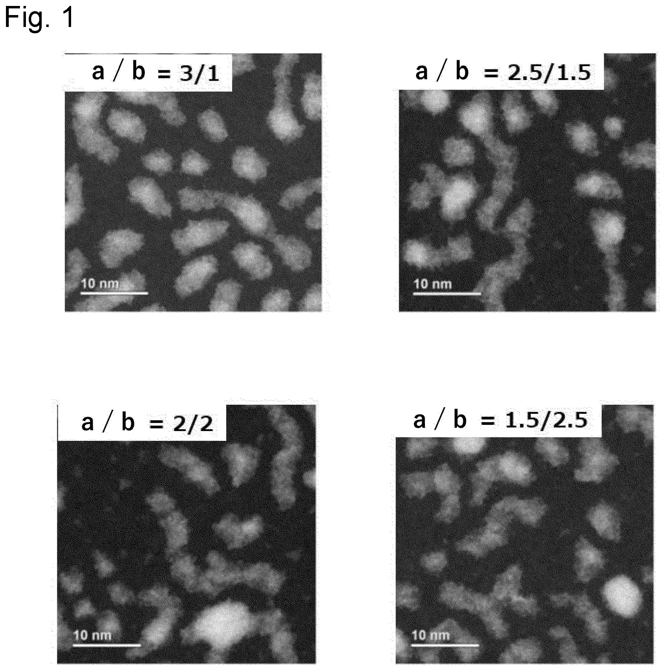

Each of the semiconductor nanoparticles including AgCu chalcogen compounds (ratios of Ag loaded: 3/1, 2.5/1.5, 2/2, and 1.5/2.5), synthesized in the present Embodiment, was observed with TEM. Fig. 1 shows TEM images of the respective semiconductor nanoparticles produced in the present Embodiment (see scale bars in each of the images, with respect to the magnifications). Referring to Fig. 1, the AgCu chalcogen compound synthesized at a ratio of Ag loaded of 3/1 allows many substantially spherical nanoparticles to be observed. As the ratio of Ag loaded is lower (the proportion of Cu is higher), irregular nanoparticles are liable to accordingly increase.

### [Compositional analysis of semiconductor nanoparticle]

Each of the semiconductor nanoparticles including AgCu chalcogen compounds synthesized in the present Embodiment (ratios of Ag loaded: 3/1, 2.5/1.5, 2/2, and 1.5/2.5) was subjected to compositional analysis with SEM-EDS analysis. Table 1 shows the measurement results of the compositions of the respective semiconductor nanoparticles. The compositional analysis results are expressed with "% by atom" relative to the entire nanoparticle in the present Embodiment and each Embodiment below. Table 1 shows both the ratio x/y of the number (x) of Ag atoms and the number (y) of Cu atoms and the ratio z/(x + y) of the number (z) of chalcogen element atoms and the number (x + y) of atoms of transition metal components, as calculated based on the compositional analysis results.

**[Table 1]**

| No. | Ratio of Ag loaded (a/b) | Composition (% by atom) | | | | x/y | z/(x+y) | z^{Te}/z |
|---|---|---|---|---|---|---|---|---|
| | | Ag | Cu | Te | S | | | |
| 1 | 3/1 | 48.4 | 12.1 | 12.3 | 27.2 | 4.00 | 0.65 | 0.31 |
| 2 | 2.5/1.5 | 47.5 | 15.1 | 14.6 | 22.8 | 3.15 | 0.60 | 0.39 |
| 3 | 2/2 | 42.9 | 22.2 | 14.1 | 20.8 | 1.93 | 0.54 | 0.40 |
| 4 | 1.5/2.5 | 21.8 | 40.1 | 8.2 | 29.9 | 0.54 | 0.61 | 0.22 |

As clear from Table 1, the ratio x/y of the number (x) of Ag atoms and the number (y) of Cu atoms in the AgCu chalcogen compound naturally increases with an increase in ratio (a/b) of Ag loaded. The ratio of the number (z) of chalcogen element atoms and the number (x + y) of atoms of transition metal components (Ag and Cu) is also confirmed not to largely vary even when the ratio of Ag loaded changes. Each of the AgCu chalcogen compounds synthesized in the present Embodiment is confirmed not only to essentially contain Te as the chalcogen element, but also to contain S as an additional chalcogen element. Furthermore, the ratio (z^{Te}/z) of the number of Te atoms relative to all the chalcogen elements does not largely vary except for No. 4, even when the ratio of Ag loaded changes. The AgCu chalcogen compound of No. 4 exhibits the lowest ratio of Ag loaded (a/b: 1.5/2.5) and is observed to be separated into two phases with reference to the results of TEM observation (Fig. 1), and only this No. 4 is considered to show a different trend.

### [Absorption spectrum and emission spectrum measurement]

Next, absorption spectrum and emission spectrum measurement were performed in order to evaluate the optical responsivity of each of the semiconductor nanoparticles. The absorption spectrum was measured in a wavelength range of 400 nm to 1600 nm with an ultraviolet visible spectrophotometer (manufactured by Agilent Technologies, Agilent 8453). The emission spectrum was measured with a diode array spectrophotometer (PMA-12, C10027-02) manufactured by Hamamatsu Photonics K.K. A sample was adjusted in a chloroform solution (n = 1.4429) so that the absorbance at 365 nm was 0.1.

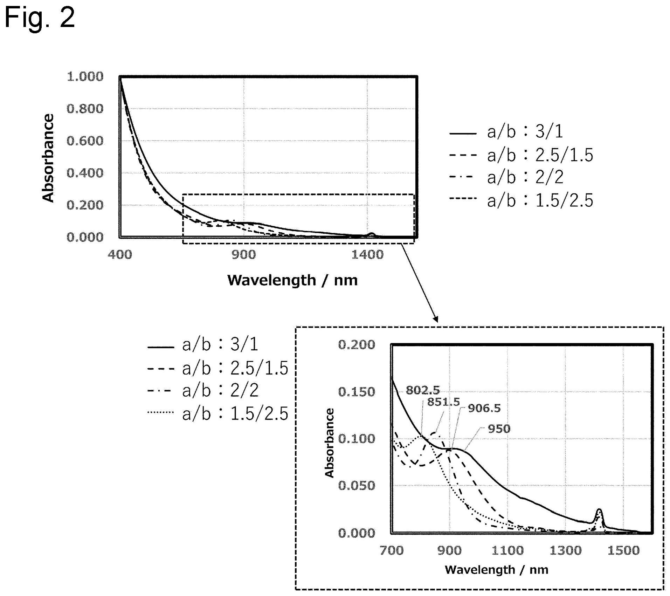

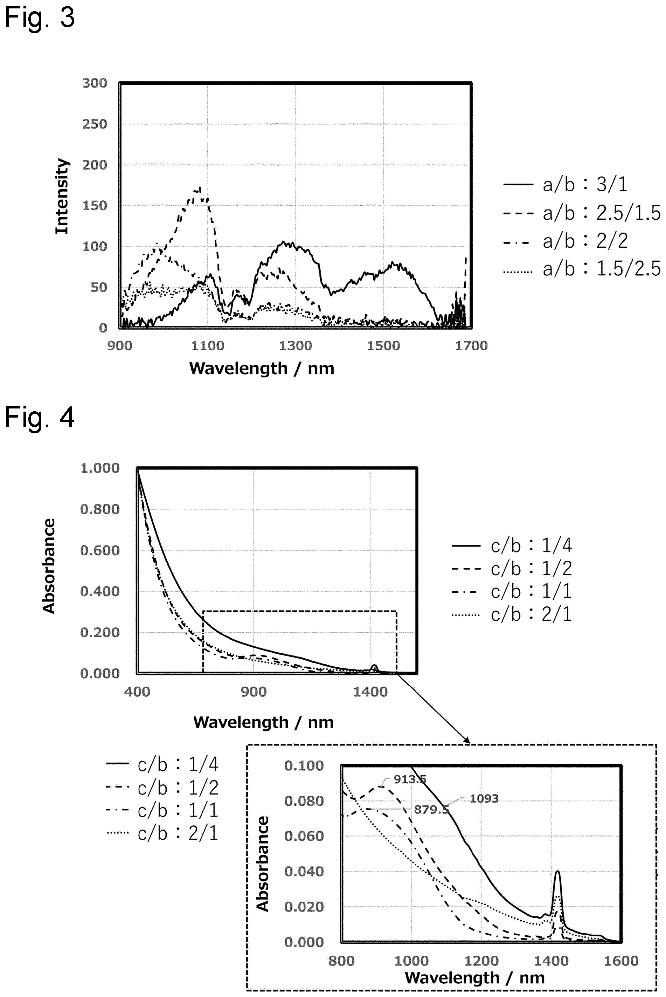

Fig. 2 and Fig. 3 respectively illustrate measurement results of absorption spectra and emission spectra of each of the semiconductor nanoparticles produced in the present Embodiment. Table 2 shows the absorption edge wavelength on the long-wavelength side and the peak wavelength of the emission spectrum of each of the semiconductor nanoparticles, as measured based on these measurement results.

**[Table 2]**

| No. | Ratio of Ag loaded (a/b) | Composition (% by atom) | | | | x/y | Absorption edge wavelength (nm) | Emission peak wavelength (nm) |
|---|---|---|---|---|---|---|---|---|
| | | Ag | Cu | Te | S | | | |
| 1 | 3/1 | 48.4 | 12.1 | 12.3 | 27.2 | 4.00 | 1576 | 1273 |
| 2 | 2.5/1.5 | 47.5 | 15.1 | 14.6 | 22.8 | 3.15 | 1549 | 1081 |
| 3 | 2/2 | 42.9 | 22.2 | 14.1 | 20.8 | 1.93 | 1441 | 1059 |
| 4 | 1.5/2.5 | 21.8 | 40.1 | 8.2 | 29.9 | 0.54 | 1548 | 1080 |

Referring to measurement results of absorption spectra in Fig. 2 and Table 2, all the semiconductor nanoparticles have light absorption characteristics in which the absorption edge is exhibited in a region of 1400 nm or more. All the semiconductor nanoparticles each not only exhibit a small peak considered as an exciton peak at a wavelength of 800 nm to 950 nm, but also express an absorption peak at around 1400 nm. When the change in composition of the AgCu chalcogen compound (AgₓCu_{y}Ch_{z}) due to the ratio (x/y) of Ag and Cu atoms is examined, the absorption edge is observed to be shifted toward a longer wavelength with a rise in x/y and an increase in ratio of Ag atoms.

All the semiconductor nanoparticles in the present Embodiment are confirmed to express light emission. Referring to measurement results of emission spectra in Fig. 3 and Table 2, an emission peak was confirmed in a wavelength region of 1000 nm or more. In particular, the emission peak wavelength of the semiconductor nanoparticle (No. 1) high in ratio of Ag atoms is located on the long-wavelength side. This semiconductor nanoparticle was observed to exhibit an emission peak in a region of 1200 nm or more.

It is deemed from the above evaluation results of optical responsivity that each of the semiconductor nanoparticles including AgCu chalcogen compounds synthesized in the present Embodiment exhibits an absorption edge at 1200 nm or more and exerts favorable light absorptivity in a long-wavelength region. In particular, the AgCu chalcogen compound nanoparticle (x/y = 4) of No. 1, having a ratio of Ag loaded of 3/1, was favorable one in which the absorption edge wavelength on the long-wavelength was located at 1500 nm or more and a peak wavelength of 1200 nm or more was exhibited in terms of light emission characteristics.

Second Embodiment: In the present Embodiment, semiconductor nanoparticles including AgCu chalcogen compounds of various compositions were each synthesized at the ratio of Te loaded adjusted. The synthesis method of such a semiconductor nanoparticle applied in the present Embodiment was basically the same as in First Embodiment, and a Te precursor solution was added to a metal source precursor solution, and heated and allowed to react, and thus each AgCu chalcogen compound nanoparticle was obtained. In the present Embodiment, the synthesis reaction was performed so that the ratio (c/b) of Te loaded, as the ratio of the number c of Te atoms in the Te precursor and the number b of Cu atoms in the metal source precursor, was 1/4, 1/2, 1/1, or 2/1 by adjustment of the amount of the Te precursor loaded during addition. After synthesis, separation/purification was performed as in First Embodiment, and thus each AgCu chalcogen compound nanoparticle was obtained. The ratio (a/b) of Ag loaded was set to 3/1 and other reaction conditions were the same as in First Embodiment.

### [Compositional analysis of semiconductor nanoparticle]

Each of semiconductor nanoparticles including AgCu chalcogen compounds synthesized in the present Embodiment (ratios of Te loaded: 1/4, 1/2, 1/1, and 2/1) was subjected to compositional analysis with SEM-EDS analysis. Table 3 shows measurement results of the respective compositions of the semiconductor nanoparticles.

**[Table 3]**

| No. | Ratio of Te loaded (c/b) | Composition (% by atom) | | | | x/y | z/(x+y) | z^{Te}/z |
|---|---|---|---|---|---|---|---|---|
| | | Ag | Cu | Te | S | | | |
| 5 | 1/4 | 49.0 | 12.0 | 10.5 | 28.5 | 4.08 | 0.64 | 0.27 |
| 6 | 1/2 | 49.2 | 11.4 | 12.0 | 27.4 | 4.32 | 0.65 | 0.30 |
| 7 | 1/1 | 46.4 | 18.0 | 16.2 | 19.4 | 2.58 | 0.55 | 0.46 |
| 8 | 2/1 | 43.2 | 21.0 | 27.1 | 8.7 | 2.06 | 0.56 | 0.76 |

Referring to Table 3, the ratio (z/(x + y)) of the number (z) of chalcogen element atoms and the number (x + y) of atoms of transition metal components (Ag and Cu) does not largely vary even when the ratio (c/b) of Te loaded increases. An increase in ratio of Te loaded leads to an increase in proportion (z^{Te}/z) of the number of Te atoms based on the number of all chalcogen element atoms. An increase in ratio of Te loaded is also liable to lead to a decrease in ratio x/y of Ag and Cu atoms.

### [Absorption spectrum and emission spectrum measurement]

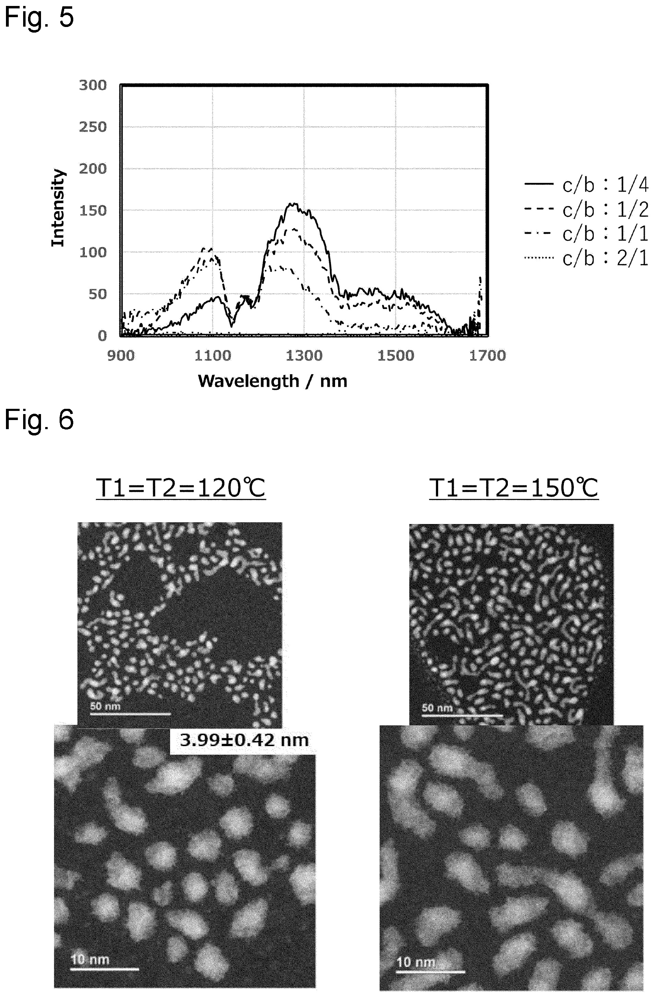

Next, absorption spectrum and emission spectrum measurement were performed as evaluation of the optical responsivity of each of the semiconductor nanoparticles produced in the present Embodiment. These measurement methods are the same as in First Embodiment. Fig. 4 and Fig. 5 illustrate these measurement results, and Table 4 shows the absorption edge wavelength on the long-wavelength side and the peak wavelength of the emission spectrum of each of the semiconductor nanoparticles.

**[Table 4]**

| No. | Ratio of Te loaded (c/b) | Composition (% by atom) | | | | x/y | Absorption edge wavelength (nm) | Emission peak wavelength (nm) |
|---|---|---|---|---|---|---|---|---|
| | | Ag | Cu | Te | S | | | |
| 5 | 1/4 | 49.0 | 12.0 | 10.5 | 28.5 | 4.08 | 1587 | 1284 |
| 6 | 1/2 | 49.2 | 11.4 | 12.0 | 27.4 | 4.32 | 1555 | 1278 |
| 7 | 1/1 | 46.4 | 18.0 | 16.2 | 19.4 | 2.58 | 1549 | 1110 |
| 8 | 2/1 | 43.2 | 21.0 | 27.1 | 8.7 | 2.06 | 1557 | - |

Referring to measurement results of absorption spectra in Fig. 4 and Table 4, all the semiconductor nanoparticles varied in ratio of Te loaded each not only exhibit an exciton peak, but also express an absorption peak at around 1400 nm. The absorption edge on the long-wavelength side with respect to each of the semiconductor nanoparticles is located in a region of 1500 nm or more. **In** particular, the semiconductor nanoparticle (No. 5) low in ratio of Te loaded (a low ratio of Te atoms in the AgCu chalcogen compound) was observed to be further elongated in absorption edge wavelength.

Referring to measurement results of emission spectra in Fig. 5 and Table 4, emission spectrum curves of the semiconductor nanoparticles of No. 5 to No. 7 (c/b:1/4 to 1/1) exhibit the same trend and do not so differ. The semiconductor nanoparticle of No. 8, high in ratio of Te loaded (c/b:2/1), did not allow any clear peak to be observed.

Third Embodiment: **In** the present Embodiment, the optical responsivity of each of semiconductor nanoparticles obtained with the changes in synthesis conditions of AgCu chalcogen compound nanoparticles was studied.

First, the effect with the temperatures before and after reaction system formation was studied. The heating temperature (T1) of the metal source precursor solution before addition of the Te precursor solution to the metal source precursor solution and the heating temperature (reaction temperature: T2) after addition of the Te precursor solution were adjusted in the synthesis step of a AgCu chalcogen compound nanoparticle in First Embodiment. Specifically, AgCu chalcogen compound nanoparticles were synthesized under three conditions of (i) T1 = T2 = 150°C, (ii) T1 = 150°C, T2 = 120°C, and (iii) T1 = T2 = 120°C. The respective heating times in this study were the same as in First Embodiment.

In the present Embodiment, the effect with the heating time (reaction time) after addition of the Te precursor solution to the metal source precursor solution was also studied. In this study, the reaction time was set to 5 min, 10 min, 20 min, 40 min, and 80 min, and thus AgCu chalcogen compound nanoparticles were synthesized. The heating temperatures in this study were set to T1 = T2 = 120°C.

In each study, other synthesis method/conditions than the above reaction conditions were the same as in First Embodiment, and the ratio (a/b) of Ag loaded was set to 3/1.

The temperatures before and after reaction system formation, in study results in the present Embodiment, are first described. Fig. 6 shows TEM images of AgCu chalcogen compound nanoparticles synthesized with the above heating conditions (i) to (iii). It can be seen from these TEM images that a nanoparticle having a stable particle shape is synthesized in the heating condition (iii) in which both the heating temperatures before and after reaction system formation (T1 and T2) are set to 120°C. The shape of the nanoparticle is liable to be destabilized with inclusion of heating at 150°C.

The respective semiconductor nanoparticles under the condition (i) (T1 = T2 = 150°C) and the condition (iii) (T1 = T2 = 120°C) where the heating temperatures before and after reaction system formation were the same were each subjected to compositional analysis with EDS. Table 5 shows these results. It has been found from Table 5 that these AgCu chalcogen compound nanoparticles, although differ in particle shape, do not largely differ in composition.

**[Table 5]**

| No. | Heating temperature (T1/T2) | Composition (% by atom) | | | | x/y | z/(x+y) | z^{Te}/z |
|---|---|---|---|---|---|---|---|---|
| | | Ag | Cu | Te | S | | | |
| 9 | 120°C/120° C | 50.1 | 12.0 | 12.3 | 25.6 | 4.18 | 0.65 | 0.32 |
| 10 | 150°C/150° C | 48.4 | 12.1 | 12.3 | 27.2 | 4.00 | 0.65 | 0.31 |

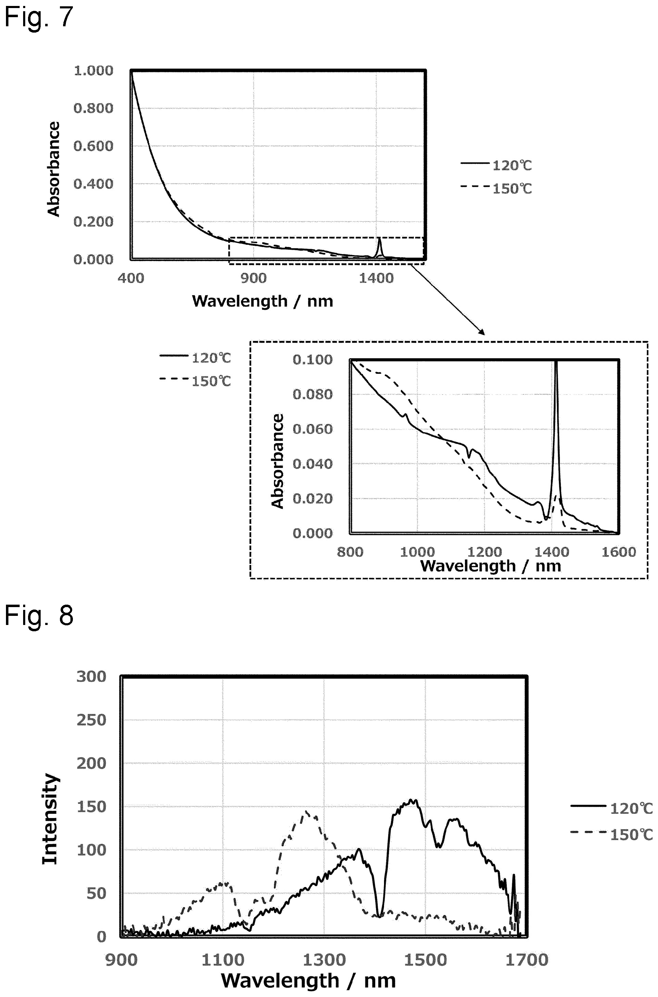

Fig. 7, Fig. 8 and Table 6 show measurement results of absorption spectra and emission spectra of these two semiconductor nanoparticles.

**[Table 6]**

| No. | Heating temperature (T1/T2) | Composition (% by atom) | | | | x/y | Absorption edge wavelength (nm) | Emission peak wavelength (nm) |
|---|---|---|---|---|---|---|---|---|
| | | Ag | Cu | Te | S | | | |
| 9 | 120°C/120°C | 50.1 | 12.0 | 12.3 | 25.6 | 4.18 | 1587 | 1471 |
| 10 | 150°C/150°C | 48.4 | 12.1 | 12.3 | 27.2 | 3.15 | 1576 | 1273 |

Referring to measurement results of absorption spectra in Fig. 7 and Table 6, absorption characteristics of the semiconductor nanoparticles with the heating conditions (i) and (iii) exhibits totally similar curves. However, the semiconductor nanoparticle with (iii) at heating temperatures before and after reaction system formation, set to 120°C, exhibits not only a clearly increased absorption peak intensity, but also a longer absorption edge wavelength. Referring to measurement results of emission spectra in Fig. 8 and Table 6, the emission peak wavelength of the semiconductor nanoparticle with (iii) at heating temperatures before and after reaction system formation, set to 120°C, is largely (200 nm or more) shifted toward a longer wavelength.

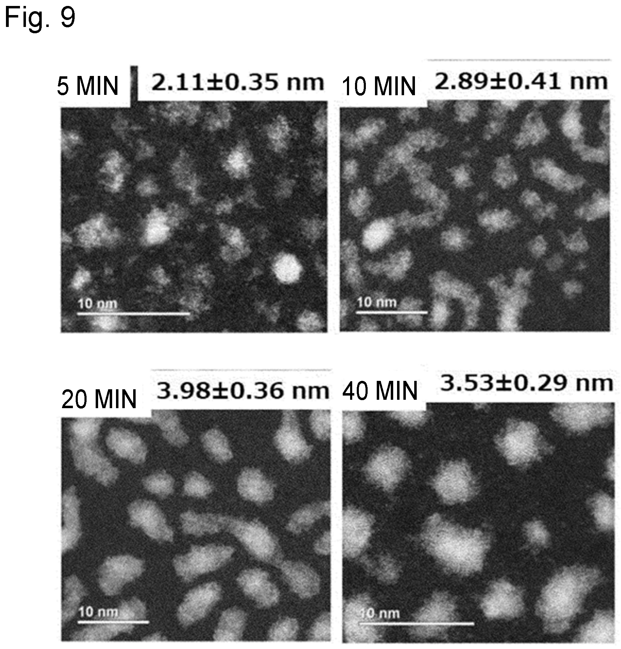

Next, study results of the effect with the reaction time are described. Fig. 9 shows TEM images of AgCu chalcogen compound nanoparticles synthesized with reaction times of 5 min to 40 min (T1 = T2 = 120°C). It can be seen from Fig. 9 that the particle shape is close to a spherical shape with a long reaction time. Table 7 shows compositional analysis results with EDS of these semiconductor nanoparticles. Referring to Table 7, no large difference in ratio of atoms, (z/(x + y)), between the transition metal components (Ag and Cu) and the chalcogen element occurs even with an increase in reaction time. The ratio (x/y) of Ag atoms in the transition metal component falls within a range of 3.0 to 5.0 and does not also so differ.

**[Table 7]**

| No. | Reaction time (min) | Composition (% by atom) | | | | x/y | z/(x+y) | z^{Te}/z |
|---|---|---|---|---|---|---|---|---|
| | | Ag | Cu | Te | s | | | |
| 11 | 5 | 48.3 | 12.9 | 13.3 | 25.5 | 3.74 | 0.63 | 0.34 |
| 12 | 10 | 49.9 | 11.3 | 13.5 | 25.3 | 4.42 | 0.63 | 0.35 |
| 13 | 20 | 49.8 | 12.0 | 12.6 | 25.6 | 4.15 | 0.62 | 0.33 |
| 14 | 40 | 48.3 | 14.2 | 12.7 | 24.9 | 3.40 | 0.60 | 0.34 |

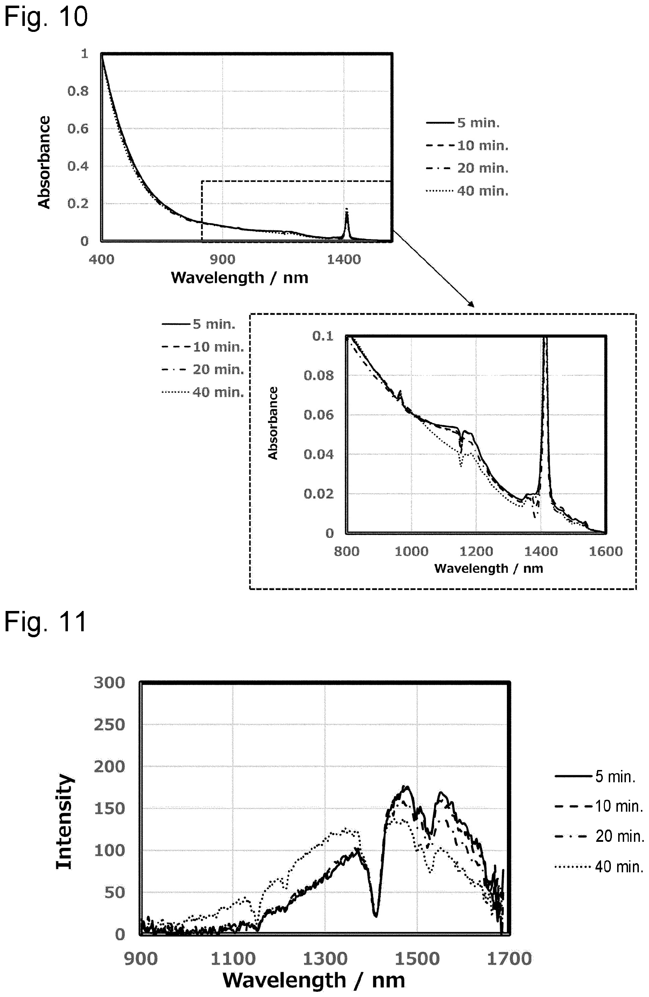

Fig. 10 illustrates measurement results of absorption spectra of AgCu chalcogen compound nanoparticles synthesized with reaction times of 5 min to 40 min (T1 = T2 = 120°C), Fig. 11 illustrates measurement results of emission spectra of ones, and Table 8 summarizes and shows these measurement results.

**[Table 8]**

| No. | Reaction time (min) | Composition (% by atom) | | | | x/y | Absorption edge wavelength (nm) | Emission peak wavelength (nm) |
|---|---|---|---|---|---|---|---|---|
| | | Ag | Cu | Te | S | | | |
| 11 | 5 | 48.3 | 12.9 | 13.3 | 25.5 | 3.74 | 1589 | 1479 |
| 12 | 10 | 49.9 | 11.3 | 13.5 | 25.3 | 4.42 | 1588 | 1471 |
| 13 | 20 | 49.8 | 12.0 | 12.6 | 25.6 | 4.15 | 1587 | 1471 |
| 14 | 40 | 48.3 | 14.2 | 12.7 | 24.9 | 3.40 | 1593 | 1470 |

Referring to absorption spectra in Fig. 10, no large differences in absorption characteristics among the respective semiconductor nanoparticles are observed except for the case of a reaction time of 80 min. Referring to measurement results of emission spectra in Fig. 11, it is deemed that emission spectrum curves do not differ and the emission peak wavelengths are also almost the same, as in the absorption spectrum results.

Study results with respect to synthesis conditions studied in the present Embodiment are summarized, and it is deemed that the heating temperature and the reaction temperature of the metal source precursor are more preferably set to a relatively lower temperature of 120°C than 150°C (First Embodiment). **It** is deemed that a longer reaction time is more preferable because spheronization of a particle is observed, whereas it is considered that no differences in other characteristics than the outer shape of the particle are observed. The reaction time is considered to be able to be relatively freely set. Semiconductor nanoparticle synthesis conditions are required to be adjusted with the transition metal/chalcogen element concentrations in the metal source precursor and the Te precursor, and the scale of the reaction system, and can be set with reference to results in the present Embodiment.

### INDUSTRIAL APPLICABILITY

As described above, the semiconductor nanoparticle including a AgCu chalcogen compound of the present invention can exhibit favorable optical responsivity. This AgCu chalcogen compound is provided also in consideration of correspondence to use restrictions and avoidance of use of heavy metals. The semiconductor nanoparticle of the present invention is expected to be applied in a light-emitting element or a fluorescent substance utilized in a display apparatus, a marker substance for bio-related substance detection, or the like, or a photoelectric conversion element or a light-receiving element mounted in a solar battery, a light sensor, or the like. In particular, the present invention has achieved improvements in light absorption characteristics in a long-wavelength region including the near infrared region (NIR) and the short-wave infrared region (SWIR). The present invention is thus particularly useful for a light-receiving element applicable in LIDAR and SWIR image sensors where responsivity in the near infrared region is important, among photonic elements described above.

## Claims

1. A semiconductor nanoparticle comprising a AgCu chalcogen compound containing Ag, Cu, and a chalcogen element, represented by the following formula, wherein
the chalcogen element contains Te as an essential chalcogen element, and
the semiconductor nanoparticle comprises 90% by atom or more of the AgCu chalcogen compound:
[Formula 1] AgₓCu_{y}Ch_{z}
wherein Ch is a chalcogen element, x, y, and z are the respective numbers of Ag, Cu, and chalcogen element atoms, and 0.2 ≤ z/(x + y) ≤ 1 and 1.0 ≤ x/y ≤ 10.0 are satisfied.

2. The semiconductor nanoparticle according to claim 1, wherein a chalcogen element constituting the AgCu chalcogen compound contains an additional chalcogen element other than Te, and the additional chalcogen element is S or Se.

3. The semiconductor nanoparticle according to claim 2, wherein a ratio of the number of Te atoms to the number of chalcogen element atoms constituting the AgCu chalcogen compound is 0.2 or more and 0.4 or less.

4. The semiconductor nanoparticle according to claim 1 or claim 2, wherein the semiconductor nanoparticle comprises 99% by atom or more of the AgCu chalcogen compound.

5. The semiconductor nanoparticle according to claim 1 or claim 2, wherein the semiconductor nanoparticle has an average particle size of 2 nm or more and 20 nm or less.

6. The semiconductor nanoparticle according to claim 1 or claim 2, wherein at least any one of an alkylamine having 4 or more and 20 or less alkyl chain carbon atoms, an alkenylamine having 4 or more and 20 or less alkenyl chain carbon atoms, an alkylcarboxylic acid having 3 or more and 20 or less alkyl chain carbon atoms, an alkenylcarboxylic acid having 3 or more and 20 or less alkenyl chain carbon atoms, and an alkanethiol having 4 or more and 20 or less alkyl chain carbon atoms is bound as a protective agent to a surface of the semiconductor nanoparticle.

7. The semiconductor nanoparticle according to claim 1 or claim 2, wherein an absorption edge wavelength on a long-wavelength side of an absorption spectrum is 1200 nm or more.

8. The semiconductor nanoparticle according to claim 1 or claim 2, wherein a peak wavelength of an emission spectrum is 1000 nm or more.
